# EUROPEAN PATENT SPECIFICATION

(11) **EP 1 164 301 B1**
(45) Date of publication and mention of the grant of the patent: **31.10.2007**
(21) Application number: 01114133.0
(22) Date of filing: 11.06.2001
(51) Int. Cl.: F16C 29/02, F16C 23/04

(54) **Axially sliding support**
Axial gleitendes Lager
Support glissant axial

(30) Priority: 12.06.2000 IT FI000133
(43) Date of publication of application: 19.12.2001
(73) Proprietor: GE Transportation Systems S.p.A., 50127 Firenze (IT)
(72) Inventor: Biagiotti, Maurizio, 56124 Pisa (IT)
(74) Representative: Gervasi, Gemma

(56) References cited:
- GB-A- 434 809
- GB-A- 553 067
- GB-A- 773 870
- US-A- 3 765 733
- US-A- 4 729 145
- PATENT ABSTRACTS OF JAPAN vol. 0100, no. 59 (M-459), 8 March 1986 (1986-03-08) -& JP 60 205011 A (HITACHI SEISAKUSHO KK; others: 01), 16 October 1985 (1985-10-16)

## Description

### Field Of The Invention

The present invention concerns a support or joint for coupling two axially mutually movable elements.

More in particular, the present invention refers to a support apt to connect two elements which can go out of alignment, thus damaging the correct operation of the transmission.

### Prior Art

They are already known supports basically consisting of a ball bearing sliding along an axis, whose framework is coupled, thanks to its spherical shape, to a cylindrical part apt to be connected to an external element.

Furthermore, said spherical shape of the framework requires an external locking element which, in its turn, will be connected to the aforesaid external element, thus causing an increase of axial dimensions.

Moreover, these brasses have a limited radial capacity load if compared to the object of the present invention, though having its same axial length, which makes them unsuitable for applications possibly requiring high capacity loads. US patent N. 4,729,145 discloses a piston which is linearly displaceable guided in a housing and mounted in a bearing which is seated in a receptacle of the housing. A scraper ring and a sealing ring are positioned in front of the bearing. The sealing ring and the scraper ring are jointly mounted in the housing with the bearing as a structural unit.

### Scope Of The Invention

A first object of the present invention is to overcome the aforesaid disadvantages present in the prior art sliding supports.

A second object of the present invention is to provide a support for axially moving drive shafts which are substantially insensitive to possible misalignments of the axis due, for example, to asymmetric elements to be dragged.

### Summary Of The Invention

According to the present invention these goals are achieved by a support according to claim 1.

On the brass they are mounted in a movable way two opposite caps, having a semi-spherical shape, which can be engaged with a seat in an external fixed block having a toroidal shape whose bend corresponds to the one of the caps in order to obtain a spherical coupling.

The advantages thus obtained are represented by the fact that said spherical joint for coupling the internal shaft/fixed block allows their spontaneous alignment and therefore allows their axial mutual sliding, even in the presence of misalignments having a width of some degrees, without the risk of a danger for the brass operation.

Another advantage is represented by the high efficiency, low cost and easy dismounting of the support.

A further advantage is represented by the reduced radial dimensions of the brass.

### List Of The Drawings

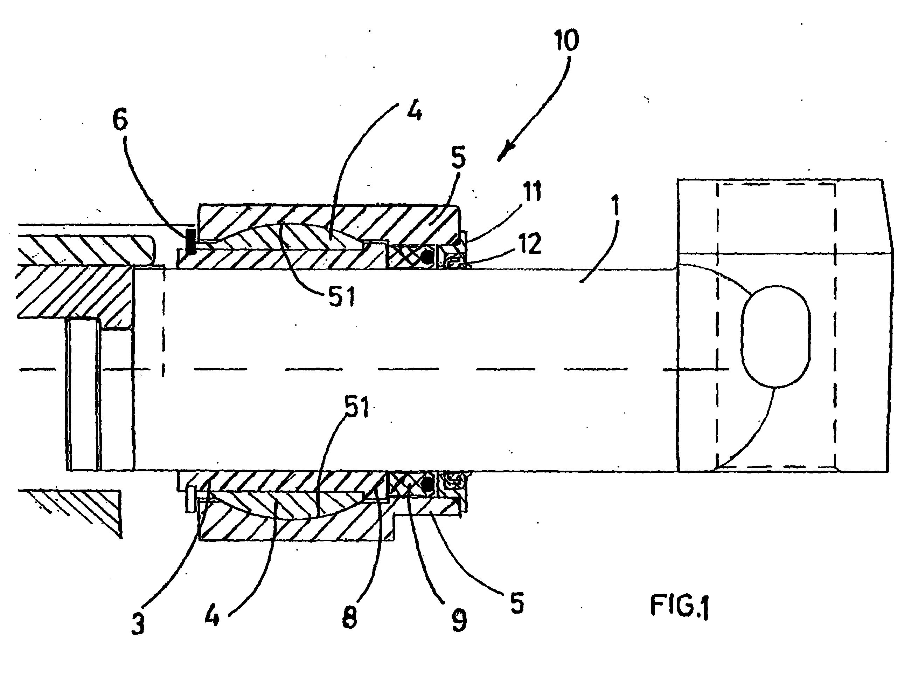

The aforesaid and some more advantages of the present invention will be better comprised by any person skilled in the art thanks to the following non-limitative embodiment resulting from the following description and shown in the alleged figures, wherein
Figure 1 shows a cross-section side view of the support according to the invention;

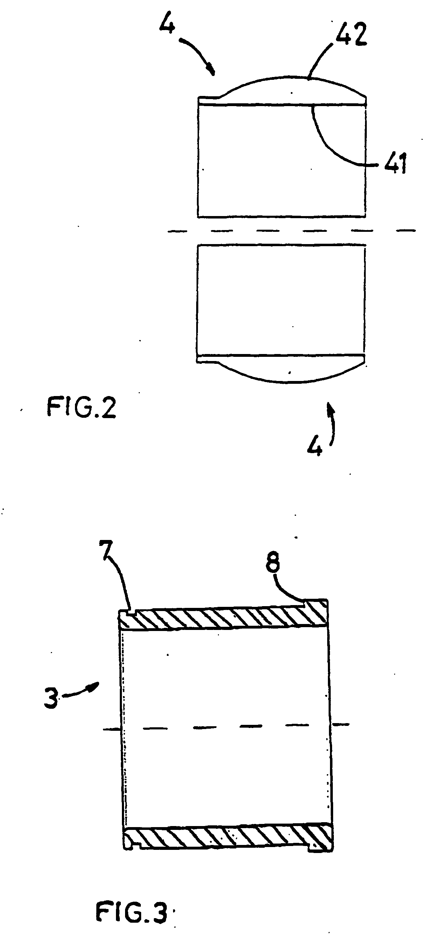

Figure 2 shows a detail of the spherical caps of the support of figure 1;
Figure 3 shows a detail of the brass of the support of figure 1.

### Detailed Description

With a reference to the drawings, in a preferred embodiment a support 10 according to the invention is used for the axial coupling with a sliding shaft 1.

The support consists of a cylindrical brass 3 along which shaft 1 accurately slides. On brass 3 two opposite caps 4 are mounted in a movable way, contacting a projection 8 of the external surface of the brass. The internal surface 41 of the caps is cylindrical and can be exactly superimposed on the brass 3, whereas the external surface 42 has a toroidal shape with a preferably spherical bend.

The caps 4 are mounted in a seat 51 placed in an external fixed block 5, whose internal surface has a toroidal profile corresponding to the surfaces 42 of the caps apt to obtain a ball joint coupling.

The assembling of support 10 is completed by a security ring 6 mounted in a corresponding external cavity 7 of brass 3 contacting caps 4, which are therefore axially blocked between the projection 8 and the ring 6.

Furthermore, they are also provided a first seal 9 and an external locking ring 11 which is forced into the block 5 and which can slide along shaft 1 in the presence of a second seal 12.

In order to avoid the rotation of caps 4 around shaft 1, it is further preferably provided a locking element, for example a pin passing through one of the caps and which can be engaged with brass 3.

During operation, shaft 1 can slide in relation to the support 10 and to the body 2 along a pre-arranged direction corresponding to the axis of seat 51 and which, under ideal alignment conditions, also corresponds to the axis of the shaft.

If the axis of shaft 1 is deflected because of an asymmetric element to be dragged or the like, caps 4 turn in the seat 51 and allow a self-alignment of the load direction and of the sliding direction avoiding that brass 3 undergoes harmful radial efforts.

In some preferred embodiments, the support according to the invention can be used in applications characterized by the dragging of remarkable loads, often causing misalignments, for example in railway equipments.

The present invention has been described with a reference to some preferred embodiments, but analogous modifications can be carried out by the man skilled in the art without leaving the scope of the invention.

## Claims

1. Support for axially and slidingly supporting a shaft (1), consisting of a cylindrical brass (3) along which the shaft can accurately slide **characterised in that** two opposite caps (4) are mounted in a movable way, their internal surface (41) being exactly superimposable on brass (3), their external surface (42) having a toroidal convex shape and being engaged with the corresponding concave surface of a seat (51) in an external fixed block (5) in order to obtain a ball joint coupling with caps (4).

2. Support according to claim 1, **characterized in that** it comprises a security ring (6) placed in a corresponding external cavity (7) of brass (3) contacting caps (4), which are thus axially blocked between said ring (6) and a projection (8) on the external surface of the brass.

3. Support according to claim 1, **characterized in that** at least a cap (4) is provided with an anti-rotation element.

4. Support according to claim 3, **characterized in that** said anti-rotation element is a pin passing through a cap (4) and which is engaged with brass (3).

5. Support according to claim 1, **characterized in that** between block (5) and shaft (1) they are further provided a first seal (9) and an external locking ring (11) forced into block (5) and sliding along shaft (1) in the presence of a second seal (12).

## Patentansprüche

1. Abstützung zum axialen und gleitenden Abstützen einer Welle (1), bestehend aus einer zylindrischen Lagerschale (3), an der die Welle spielfrei entlang gleiten kann,
**dadurch gekennzeichnet, dass**
zwei gegenüberliegende Kappen (4) beweglich montiert sind, deren innere Oberflächen (41) exakt auf die Lagerschale (3) aufsetzbar sind, deren äußere Oberflächen (42) eine ringförmige konvexe Form haben und in Eingriff mit der entsprechend konkaven Oberfläche eines Sitzes (51) in einem von außen fixierten Block (5) stehen, um eine Kugelgelenkkupplung mit den Kappen (4) zu erzielen.

2. Abstützung nach Anspruch 1, **dadurch gekennzeichnet, dass** sie einen Sicherheitsring (6) umfasst, der in einer entsprechenden äußeren Aussparung (7) der die Lagerschale (3) kontaktierenden Kappen (4) platziert ist, die **dadurch** axial zwischen diesem Ring (6) und einem Vorsprung (8) auf der äußeren Oberfläche der Lagerschale blockiert werden.

3. Abstützung nach Anspruch 1, **dadurch gekennzeichnet, dass** mindestens eine Kappe (4) mit einer Verdrehsicherung versehen ist.

4. Abstützung nach Anspruch 3, **dadurch gekennzeichnet, dass** diese Verdrehsicherung ein Stift ist, der durch eine Kappe (4) hindurch tritt und mit der Lagerschale (3) in Eingriff steht.

5. Abstützung nach Anspruch 1, **dadurch gekennzeichnet, dass** zwischen dem Block (5) und der Welle (1) weiter eine erste Dichtung (9) und ein äußerer Verschlussring (11) vorgesehen sind, der in den Block (5) eingepresst ist und entlang der Welle (1) in Anwesenheit einer zweiten Dichtung (12) gleitet.

## Revendications

1. Support pour supporter axialement et d'une manière coulissante un arbre (1) constitué d'un coussinet cylindrique (3) le long duquel l'arbre peut coulisser d'une manière précise, **caractérisé en ce que** deux capuchons opposés (4) sont installés d'une manière mobile, leur surface interne (41) pouvant être superposée exactement au coussinet (3), leur surface externe (42) ayant une forme toroïdale convexe et étant en prise avec la surface concave correspondante d'un siège (51) dans un bloc externe fixe (5) pour obtenir un couplage à articulation sphérique avec les capuchons (4).

2. Support selon la revendication 1, **caractérisé en ce qu'**il comprend une bague de sécurité (6) placée dans une cavité extérieure correspondante (7) du coussinet (3) venant en contact avec le capuchon (4), qui sont ainsi bloqués axialement entre ladite bague (6) et une saillie (8) sur la surface extérieure du coussinet.

3. Support selon la revendication 1, **caractérisé en ce qu'**au moins un capuchon (4) est muni d'un élément anti-rotation.

4. Support selon la revendication 3, **caractérisé en ce que** ledit élément anti-rotation est un axe passant à travers un capuchon (4) et qui est mis en prise avec le coussinet (3).

5. Support selon la revendication 1, **caractérisé en ce que** sont prévus en outre entre le bloc (5) et l'arbre (1) un premier joint (9) et une bague de verrouillage externe (11) forcés dans le bloc (5) et coulissant le long de l'arbre (1) en présence d'un second joint (12).
